Europäisches Patentamt

(19) European Patent Office

Office européen des brevets

(11) Publication number: **0 174 719**
**A1**

(12) **EUROPEAN PATENT APPLICATION**

(21) Application number: **85304921.1**

(22) Date of filing: **10.07.85**

(51) Int. Cl.⁴: **B 23 K 9/16**
**B 23 K 9/28**

(30) Priority: **03.08.84 US 637427**

(43) Date of publication of application:
**19.03.86 Bulletin 86/12**

(84) Designated Contracting States:
**DE FR GB IT**

(71) Applicant: **TWECO PRODUCTS, INC**
**4200 W. Harry**
**Wichita Kansas 67277(US)**

(72) Inventor: **Toothaker, David L.**
**1342 Wellington Place**
**Wichita Kansas 67203(US)**

(74) Representative: **Pears, David Ashley et al,**
**REDDIE & GROSE 16 Theobalds Road**
**London WC1X 8PL(GB)**

(54) **Welding gun apparatus.**

㊼ A welding gun is connected by a cable (22) to a connector block (24) for the supply of welding wire, welding current and shielding gas to the gun. The connector block (24) has a connector plug (26) with inlets (76, 78) for the gas. The welding wire is guided through a coiled wire (52) in a sheath (41). The coiled wire is terminated in a collar (38). In order to provide a seal for the shielding gas, a front, thin walled portion (47) of the collar (38) is a tight fit in the connector plug (26) and is internally abutted by the sheath (41) of the coiled wire guide (50).

FIG 5

- 1 -

## WELDING GUN APPARATUS

This invention relates to a welding gun apparatus.

Welding guns in which welding wire, electrical power and shielding gas are supplied to a tip of the gun are well known in the prior art. These guns usually have a cable extending from the gun proper to a connector block which is plugged into an adaptor through which wire, welding current and shielding gas are supplied to the cable and hence to the gun. Guns of this kind are described in US 3 629 547 and US 4 297 561. Provision may also made for a coolant to be circulated to the welding gun for cooling purposes.

In the above mentioned references the welding wire is guided through a coiled wire which terminates in a collar in the connector block. In order to prevent the escape of shielding gas a synthetic rubber sleeve is fitted over the coiled wire guide against the inner end of the collar. This form of seal can lead to leakage problems.

The object of the present invention is to provide a simpler, cheaper and more reliable means of effecting a seal to prevent the gas escaping.

According to the present invention, there is provided a welding gun apparatus comprising a welding gun and a connector block interconnected by a cable through which welding wire, welding current and a shielding gas are supplied to the gun, the connector block including a connector plug for plugging into an adaptor from which the wire, current and gas are supplied, the cable including a tubular guide for the welding wire terminating in a collar plugging the end of the connector plug and means for effecting a seal to prevent escape of shielding gas around the tubular guide, characterised in that the means for effecting a seal is an integral, inner portion of the terminating collar, which plugs in gas-tight manner into the connector plug and which also effects a seal around the tubular guide.

Preferably the said inner portion of the terminating collar is thin-walled and plugs tightly into the connector plug.

The invention will be described in more detail, by way of example, and with reference to the accompanying drawings, in which:

Fig 1 is a side elevation view of a welding gun apparatus comprising a welding gun, a cable and a quick connector block;

Fig 2 is an exploded view of the connector block and a connector plug thereof;

Fig 3 is a partial side elevation in cross-section of the connector plug;

Fig 4 is a cross-sectional view taken along the line 4-4 in Fig 3; and

Fig 5 is an elevational cross-sectional view of the connector block showing details thereof.

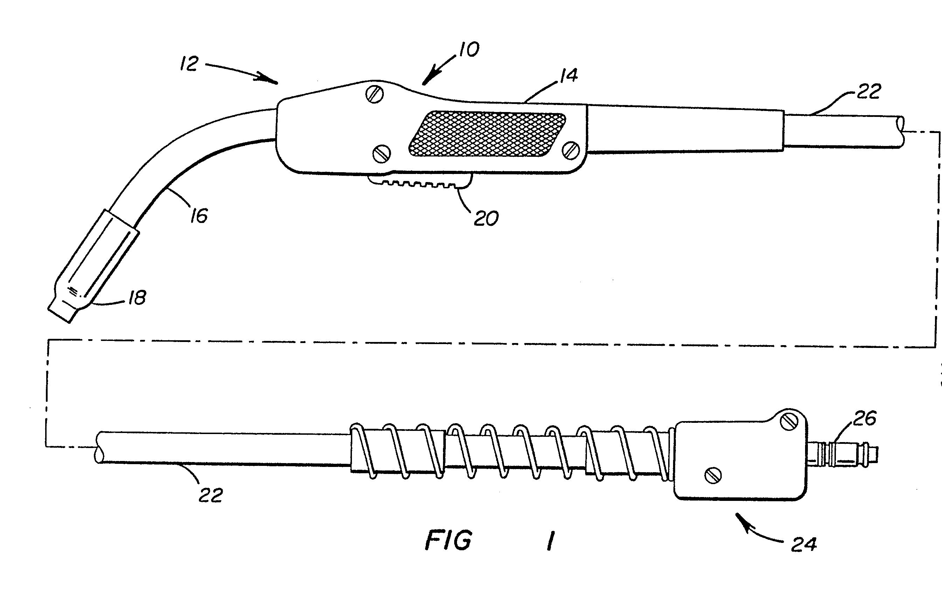

As seen in Fig 1, a welding gun apparatus 10 consists of a welding gun 12 with a handle 14 having a supply tube 16 extending from the forward portion thereof and supporting a nozzle tip 18. A trigger switch 20 depends from the under-side of the handle for purposes of actuation of the power supply and welding wire feeder (not shown).

Electric power, welding wire, and an inert shielding gas such as helium or argon are supplied to the welding gun through a cable 22 which terminates in a connector block 24. The cable 22 consists of a central coiled wire 50 providing a passage 52 through which the welding wire is fed, a sheath 41 over the coiled wire, an insulating sleeve 22A, a braided conductor 92 for the welding current, a sheath 22B over this conductor, and an outer sheath 22C. There is a gap 22D between the sheath 41 and the sleeve 22A allowing the passage of the shielding gas. An elongated connector plug assembly 26 extends from the end of the connector block and is adapted to fit into a supply adapter (not shown) to transfer gas, welding wire, and electrical power to the welding gun.

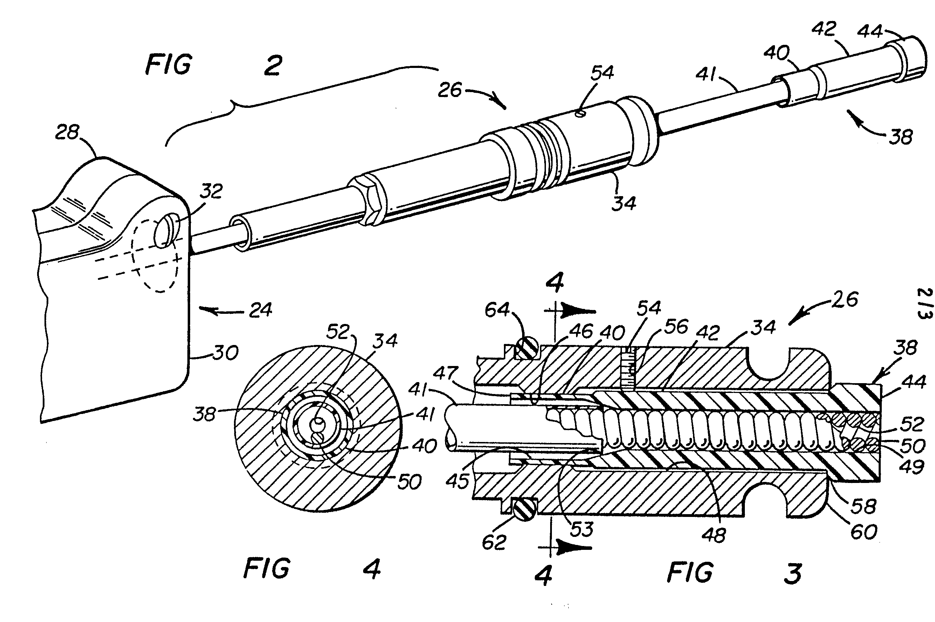

Turning to Figure 2, the connector block 24 is in turn composed of generally rectangular and mating, right and left connector cases 28, 30. Extending from the end of the connector block 24 is the connector plug assembly 26 which consists of a generally elongated plug 34 having a conduit stop or plug 38 fitted therein as also seen in Figures 3 and 4.

The generally elongated conduit stop 38 fits over the stripped end of the coiled wire 52. The conduit stop 38 is cylindrical and has a reduced diameter, thin-walled front portion 40, an intermediate diameter portion 42 of slightly larger diameter than the smaller diameter portion, and a larger diameter portion 44. An enlarged internal bore 45 is included within the smaller diameter portion 40 and is dimensioned slightly less than the diameter of the smaller portion so as to produce a thin wall 47. A second bore 49 of a diameter less than that of bore 45 extends through the larger and intermediate diameter portions of conduit stop 38. The smaller diameter portion 40 is interference fitted within a corresponding concentric bore 46 within connector plug 34. Because the wall 47 is thin, and does not fit tight to the coiled wire 50, the wall is able to deform and positive seal is produced without a hard or stiff press fit.

The cylindrical sheath 41 of the helical coil of wire 50 defining the central weld wire bore 52 for passage of welding wire is made of resilient material such as a plastic and is cut back so as to abut a frustoconical surface 53 formed within the conduit stop 38. Thus the shielding gas is prevented from escaping either outside or inside the stop 38. Small set screw 54 in a threaded bore 56 in the connector plug 34 secures the conduit stop within its accommodating bores 46, 48. A beveled annular portion 58 on the conduit stop 38 abuts the end wall 60 of the connector plug 34 to assist in preventing lateral motion of the conduit stop 38 with respect to the connector plug 34. Conduit stop 38 may be made of a resilient material such as nylon plastic.

The connector plug 34, on the other hand, is made of copper because of its good electrical conductive properties. O-rings, one of which is shown at 62, are contained within accommodating O-ring grooves 64 so that the connector plug is sealed within an accommodating bore in the supply adaptor (not shown).

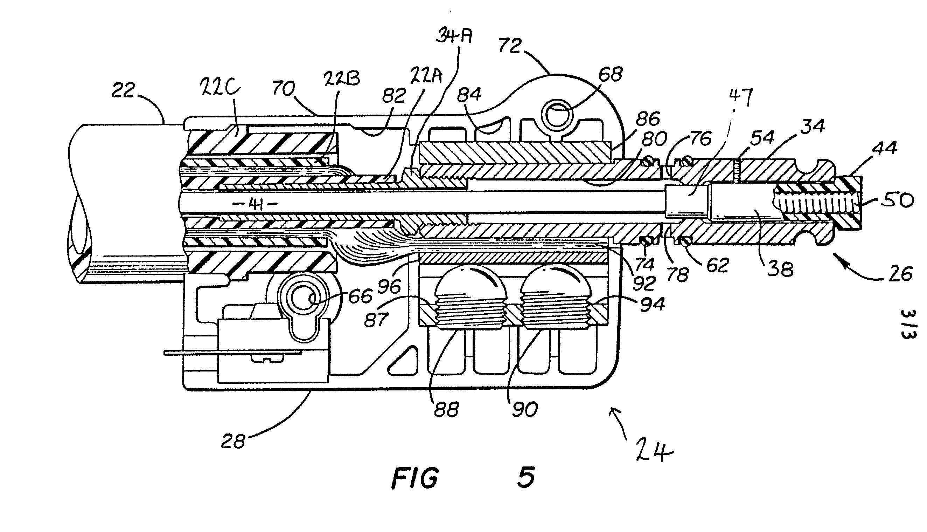

Figure 5 shows one of the connector cases shown at 28. The connector cases are held together by means of screws (not shown) screwed into sleeves 66, 68 within the connector case 28. The outer contour of the connector housing 28 is irregular, providing a central portion 70 adapted to be manually grasped and an upper arcuate portion 72 for receiving thumb pressure. In this manner, the connector block assembly 24 may be moved to the right in Fig 5, so as to insert the connector plug 34 into the accommodating supply adapter (not shown).

When positioned in the supply adapter, the O-ring 62 together with a spaced O-ring 74 seal against an accommodating bore in the adapter. Inert gas may be admitted through a plurality of radially directed passages two of which are shown at 76, 78 within connector plug 34, between the O-rings. The inert gas may then pass longitudinally through an elongated bore 80 within the connector plug 34 and through a nipple 34A which is screwed into the front end of the plug 34 and fits into the sheath 22A of the cable. It should be noted that the interiors of the connector cases 28, 30 are formed with irregular cavities such as a cable cavity 82 and a cable connector block cavity 84.

A cable connector block 86 is mounted in the cavity 84 and has a lower portion receiving a pair of ballpoint set screws 88, 90 with hexagonal socket heads, to secure the end of the braided conductor 92 against the conductive plug 34, through which current is supplied from the adapter. The cable connector block 86 is of generally rectangular shape with an elongated slot 87 therethrough. The cable connector block 86 is made of conductive material such as copper. The ballpoint set screws 88 and 90 can be turned so as to force the conductor 92 against the connector plug 34 through an intermediate elongated separator 96 so as to provide good electrical contact.

CLAIMS

1.  A welding gun apparatus comprising a welding gun (12) and a
connector block (24) interconnected by a cable (22) through which
welding wire, welding current and a shielding gas are supplied to
the gun, the connector block (24) including a connector plug (26)
for plugging into an adaptor from which the wire, current and gas
are supplied, the cable (22) including a tubular guide (50) for the
welding wire terminating in a collar (38) plugging the end of the
connector plug (26) and means (47) for effecting a seal to prevent
escape of shielding gas around the tubular guide (50), characterised
in that the means for effecting a seal in an integral, inner portion
(47) of the terminating collar (38), which plugs in gas-tight manner
into the connector plug (26) and which also effects a seal around
the tubular guide (50).

2.  Apparatus according to claim 1, wherein the tubular guide
comprises a coiled wire guide (50) in a sheath (41) and the seal
around the tubular guide (50) is formed by abutment of the sheath
against an inner wall (53) of the terminating collar.

3.  Apparatus according to claim 2, characterised in that the inner
wall (53) of the terminating collar is a frustoconical wall.

4.  Apparatus according to claim 1,2 or 3, characterised in that
the said inner portion (47) of the terminating collar (38) is thin-
walled and plugs tightly into the connector plug (26).

5.  Apparatus according to claim 4, characterised in that the said
inner portion (47) of the terminating collar (38) is of reduced
external diameter, the collar fits freely into a bore (48) in the
connector plug (26) and the reduced diameter inner portion (47) of
the collar fits tightly into a reduced diameter bore (46) inside the
plug (26).

6.  Apparatus according to claim 5, characterised in that the
reduced diameter inner portion (47) of the collar (38) is also of increased internal diameter relative to the rest of the collar.


7.    Apparatus according to any of claims 1 to 6, characterised in that the terminating collar (38) is made of resilient material.


8.    Apparatus according to claim 7, characterised in that the resilient material is nylon plastics material.


9.    A welding gun apparatus for supplying welding wire, electrical power, and shielding gas to a working area, compising a connector block (24) adapted to be releasably connected to a supply adapter to receive a shielding gas, welding wire, and electrical power therefrom, a cable (22) having one end connected to the connector block for conveying shielding gas, welding wire, and electrical power, a welding gun (12) connected to the other end of the cable, the connector block having a generally elongated connector plug (26) extending from an end thereof, the connector plug having an axial bore therethrough, and a generally elongated conduit stop (38) fitted within the axial bore and extending from one end thereof, characterised in that the conduit stop (38) is of unitary, one-piece construction.

FIG     1

FIG 2

FIG 4

FIG 3

2/3

0174719

**FIG 5**

European Patent
Office

**EUROPEAN SEARCH REPORT**

Application number

EP 85 30 4921

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| D,X | US-A-4 297 561 (R.L. TOWNSEND et al.) <br> * column 3, lines 31-41; figure 3 * | 1,7,9 | B 23 K 9/16 <br> B 23 K 9/28 |
| A | | 2-4 | |
| | --- | | |
| D,A | US-A-3 629 547 (J.R. KESTER et al.) <br> * figure 1, column 4, lines 70-75 * | 1 | |
| | --- | | |
| A | US-A-3 783 233 (G.A. DAL MOLIN) <br> * figure 4, column 8, lines 34-68 * | 1,9 | |
| | ----- | | **TECHNICAL FIELDS SEARCHED (Int Cl 4)** <br><br> B 23 K 9/00 |

The present search report has been drawn up for all claims

| Place of search | Date of completion of the search | Examiner |
|---|---|---|
| BERLIN | 24-10-1985 | WUNDERLICH J E |